# EUROPEAN PATENT SPECIFICATION

(11) **EP 2 640 519 B1**
(45) Date of publication and mention of the grant of the patent: **26.12.2018**
(21) Application number: 11842085.0
(22) Date of filing: 17.11.2011
(51) Int. Cl.: B01L 7/00, B01L 3/00, G01N 35/02

(54) **CARTRIDGE FOR A FLOW-THROUGH APPARATUS**
KASSETTE FÜR EINE DURCHFLUSSVORRICHTUNG
CARTOUCHE POUR UN APPAREIL À ÉCOULEMENT CONTINU

(30) Priority: 17.11.2010 HK 10110712
(43) Date of publication of application: 25.09.2013
(73) Proprietor: DiagCor Life Science Limited, Kowloon Bay HongKong (CN)
(72) Inventor: TAM, Wing On Joseph, Hong Kong (CN)
(74) Representative: inCompass IP Europe Limited
(86) International application number: PCT/IB2011/055152
(87) International publication number: WO 2012/066499

(56) References cited:
- EP-A2- 0 131 934
- CN-A- 1 436 856
- CN-A- 101 553 577
- JP-A- 7 051 099
- US-A- 5 741 647
- US-A- 6 054 263
- US-A1- 2006 065 652
- US-A1- 2007 026 426

## Description

### Field

The present disclosure relates a cartridge adapted for a flow-through apparatus, and more particularly to flow through apparatus having a reaction chamber for flow-through hybridization.

### Background

Identification or detection of nuclei acid molecules, such as DNA, RNA, antigens, antibodies, proteins, receptors, cells, or the like, provides useful information for clinical, diagnostic and medical applications. For example, genotyping provides useful information on genetic disease or genetic disorder for reference by medical professional. However, most identification or detection procedures involving nuclei acid molecules require precisely controlled reaction conditions to provide proper and optimal reactions for specific molecular interactions to take place so that accurate, predictable and/or consistent results can be attained.

For example, where a procedure involves the formation of a double strand helix from their complementary single strand molecules in an intermediate process, perfect (i.e. 100%) matching sequence homology capable of differentiating single base mutation requires very accurate temperature control. Where annealing is done at lower temperature, nonspecific binding will become apparent and imperfect pairing of less homologous sequence fragment giving rise to false detection will result due to formation of hybrid helix.

Nucleic acid hybridization techniques have been increasingly used in the detection of nuclei acid molecules for molecular diagnostic applications, and such techniques are built on the ability of nuclei acid strands of complementary sequences to form duplex hybrids.

A conventional reverse dot-blot hybridization process of nuclei acid is carried out in glass tubes or plastic bags in a temperature controlled hybridization oven, and such a process takes hours or even days to complete.

EP0131934 discloses an assay cartridge which has a substantially rectangular base plate, a substantially rectangular top plate, and four side walls. The top plate has a plurality of aligned adjacent reaction wells located on its top side. Each well has a hole at its bottom which opens into a waste reservoir which is the space inside of the base plate, top plate and four walls. A filter membrane is positioned against the underside of the top plate covering the well holes. A port through the base plate allows reducing the pressure in the waste reservoir relative to the pressure over the wells for drawing the liquid phase of a reaction from the well through the filter and into the waste reservoir.

US5741647 discloses devices for determining whether a target nucleic acid sequence is present in a sample and for determining the amount of a target nucleic acid sequence present in a sample using flow-through hybridisation technology.

A flow-through nuclei acid hybridization method described in US 6,638,760 and WO 2007/1 15491 is an improvement to the conventional process. In the improved method, a sample solution containing target analytes is applied to a membrane of porous substrate on which a capture polynucleotide capable of hybridizing a target nuclei acid has been immobilized. A target nuclei acid will be captured and detected when the sample solution flows through the porous substrate.

The flow-through hybridization technique is attractive because significantly higher signal intensity can be generated within a very short time by using a small volume of reagents with reduced processing time. In addition, this method can be used results can be obtained using low cost membrane-based macro-arrays.

### Summary of Invention

The invention provides a cartridge adapted for use with a flow-through hybridization apparatus wherein the cartridge comprises a moulded cartridge housing on which there is formed a grid which defines a plurality of testing compartments, and on a downstream side of the grid it is mounted a porous membrane; the grid being adapted to facilitate individual hybridization at the individual testing compartments; wherein the cartridge comprises sealing means on the downstream side of the grid to prevent analytes from passing from one testing compartment to another; the sealing means are provided in the form of a template adhered onto an underside of the membrane following the testing compartments defining grid to form a sealing gasket providing individual fluid sealing of the testing compartments when the cartridge is received inside a reaction chamber of a flow-through apparatus during use; the cartridge being characterized in having a portion of the membrane in contact with the downstream side of the grid is treated to form the sealing means when the membrane is attached to the downstream side of the cartridge housing.

The flow-through apparatus for use with the cartridge of the invention is adapted to carry out flow-through hybridization. In an example, the flow-through apparatus is adapted for desktop use. In an example, the reaction chamber is re-closeable and adapted to receive one or a selected plurality of modular type hybridization cartridges.

In an example, the flow-through apparatus comprises a thermally regulated reaction chamber and an air movement device, wherein the reaction chamber comprises a temperature regulated surface which is adapted to facilitate flow-through hybridization to take place under thermally regulated and controlled conditions, and a thermal assembly comprising an electrical powered active thermal means adapted to heat or cool the temperature regulated surface by conduction; and wherein the air movement device is adapted to cause temperature conditioning air to flow on and across the thermal assembly to thereby equalize or uniformize the temperature across the temperature regulated surface. By providing a flow of temperature conditioning air on and across the thermal assembly whereby the temperature of the temperature regulated surface is conditioned, the temperature of the reaction chamber can be set by the active thermal means whiles conditioned by the air flow, thereby promoting temperature uniformity across the entire reaction surface.

The air movement device may be adapted to move the temperature conditioning air to flow across a thermal conditioning surface on the thermal assembly in a direction parallel or substantially parallel to the temperature regulated surface. This promotes continuity in the conditioning temperature when the conditioning air streams move across the temperature regulated surface.

The thermal assembly may comprise a first surface which is in thermal contact with the reaction chamber to facilitate thermal regulation of the temperature regulated surface by conduction, and a second surface which is outside the reaction chamber and underneath the first surface and on which a plurality of conductive fins is integrally formed; wherein the second surface is the thermal conditioning surface, and the conductive fins are adapted to undergo thermal exchange with the temperature conditioning air while flowing on and across thermal conditioning surface of the thermal assembly to thereby equalize or uniformize temperature on the temperature regulated surface.

The first and second surfaces may be opposite surfaces of an aluminum heat sink. An aluminum heat sink is readily available and has good thermal exchange properties suitable for this application.

The conductive fins may be aligned to define a plurality of channels for guiding movement of the temperature conditioning air across the thermal conditioning surface of the thermal assembly. Use of the fins to define air flow paths helps to promote thermal exchange efficiency with the conditioning air while at the same time help regulate the flow of conditioning air along distributed paths which are parallel to the reaction surface to further promote temperature uniformity across the reaction surface.

In an example, an air duct is provided to guide the temperature conditioning air to move into and move out of the apparatus, and the thermal conditioning surface of the thermal assembly forms a part of the air duct. Efficiency of the thermal conditioning is enhanced as the thermal exchanger comprising the finned surface of the heat sink forms part of the air flow path.

The air duct may taper as it moves across thermal conditioning surface of the thermal assembly.

The tapering will cause acceleration of the air, and the acceleration will operate to increase the rate of thermal exchange to compensate for variation in the thermal content of the air in the course of traversing through the thermal assembly, thereby promoting temperature uniformity across the reaction surface.

The air duct may be arranged such that the temperature conditioning air exiting from the apparatus moves in a direction orthogonal or substantially orthogonal to the thermal conditioning surface of the thermal assembly. Such an orthogonal exit means a shortened air duct can be used.

The air duct may be further arranged such that the exit is located on the underside of the apparatus. Such an arrangement means exhaust air will not exit towards a user which could be a nuisance, or exits at the back of the apparatus which means additional spacing from a wall is required.

The air duct may arranged such that the direction of flow of the temperature conditioning air is reversed after leaving the thermal conditioning surface of the thermal assembly. Such a reversal of air duct also facilitates shortening or air duct and hence the dimensions of the apparatus.

For example, a portion of the air duct downstream of the thermal conditioning surface of the thermal assembly may formed as an air baffle to change the direction of flow of the temperature condition air on leaving the thermal conditioning surface of the thermal assembly.

In an example, the temperature regulated surface is part of an integrally moulded metal block formed with a plurality of regularly distributed draining apertures; and wherein the thermal assembly comprises a heat sink having a finned surface which also forms the second surface.

Temperature conditioning by a continuous air stream or air flow stream in a direction substantially parallel to the temperature controlled surface brings about improved temperature uniformity across the temperature controlled surface. It is understood that a precise temperature control coupled with temperature uniformity across the entire reaction surface in a reaction chamber is advantageous.

A guided air stream along a predefined path and direction facilitates a more precise temperature control on the reaction surface and is therefore advantageous.

The duct may comprise first and second duct parts, the first duct part being arranged to guide the temperature conditioning air stream to move from an air inlet to condition the temperature controlled surface, and the second duct part being arranged to direct the air stream to move away from the temperature controlled surface and move towards an exhaust air outlet after having temperature conditioned the temperature controlled surface.

Separation of the air stream into incoming and outgoing streams mitigates mixing or interference between the air streams and is therefore beneficial for a more precise temperature control.

The first and second duct parts may be arranged such that the directions of the incoming and outgoing airflow streams are parallel or substantially parallel but opposite. This provides a shorter ventilating path for temperature conditioning and at the same time enhanced user comfort as the exhaust air does not blow towards a user any more.

The exhaust air outlet of the air duct may be disposed such that the airflow stream exits from the apparatus at a direction substantially orthogonally to the direction of the incoming air stream.

The air duct may be partitioned into the first and second duct parts by a partitioning portion which separates the first and second duct parts, the first and second duct parts respectively defining incoming and outgoing air paths.

A reversal aperture may be formed on the air duct and intermediate the first and second duct parts, the reversal aperture being arranged such that the incoming airflow stream reverses at the reversal aperture to become the outgoing airflow stream.

The reversal aperture may be at the downstream end of the first duct part and is distal from both the air inlet and the air outlet, the reversal aperture being disposed such that the incoming air stream reverses the direction of movement to become the outgoing air stream at the reversal aperture.

In one aspect, there is provided a flow-through apparatus comprising a thermally regulated reaction chamber and an air movement device, wherein the reaction chamber comprises a temperature regulated surface (or the reaction surface) which is adapted to facilitate flow-through hybridization to take place under thermally regulated and controlled conditions, and a thermal assembly comprising an electrical powered active thermal means adapted to heat or cool the temperature regulated surface by conduction; and wherein a plurality of draining apertures adapted to drain excessive or residual liquid inside the reaction chamber is distributed on the bottom surface of the reaction chamber.

Having a plurality of draining apertures distributed on the reaction surface helps to promote uniformity of suction power on the reaction surface, and at the same time permitting the reaction chamber to be partitioned into a plurality of smaller chamber portions to permit the use of modular hybridization cartridges. For example, one or a plurality of modular hybridization cartridges, each may comprise a plurality of testing cells or compartments can be use on a demand bases.

The suction and draining network may be adapted for suction removal of excessive or residual liquid on the bottom surface of the reaction chamber is connected to the suction apertures, the suction and draining network being adapted to provide equalized or uniformized suction power or volumetric suction rate to the plurality of draining apertures. It is noted that uniform suction power promotes a controlled environment which is advantageous for flow through hybridization.

The suction and draining network may comprise a plurality of major pipes, each one of the major pipes being connected to a plurality of the suction apertures via a corresponding plurality of minor pipes; and wherein each major pipe and the plurality of minor pipes connected to that major pipe are arranged such that the suction power or the volumetric suction rate appearing at the suction apertures connected to the plurality of minor pipes is equalized or substantially equalized.

Each of the plurality of minor pipes may extend vertically downwards from the bottom surface of the reaction chamber and joins the major pipe, the major pipe having a main draining outlet at its downstream end. The length of the minor pipe most proximal the main draining outlet is the longest. The length of the minor pipe most distal from the main draining outlet is the shortest. A minor pipe more proximal the main draining outlet is longer than a minor pipe that is more distal from the main draining outlet. Such an arrangement provides a simple way to provide natural draining by gravity when suction power is not available, and at the same time providing suction power equalization.

The major pipe may be tilted such that liquid collected by the minor pipes will flow to the main draining outlet due to gravity when there is no applied suction power, and the degree of tilting of the main draining pipe is determined by the vertical length of the longest minor pipe, the vertical length of the shortest minor pipe, and the separation between the longest and the shortest minor pipes.

The tilting of the major pipe, the lengths of the minor pipes connected to the major pipe, the cross-sectional area of the minor pipes, and the distance of the minor pipes from the main draining outlet may be adapted to obtain a uniform volumetric suction rate at the draining apertures.

According to the present invention, there is provided a cartridge adapted for use with a flow-through hybridization apparatus such as those described herein, wherein the cartridge comprises a moulded cartridge housing on which there is formed a grid which defines a plurality of testing compartments, and on the downstream side of which is mounted a porous membrane; wherein the grid is adapted to facilitate individual hybridization at the individual testing compartments.

Sealing means are provided on the downstream side of the grid to provide individual fluid sealing to the individual cells when the cartridge is received inside a reaction chamber of a flow-through apparatus during use.

The sealing on the downstream side of the grid is adapted to prevent analytes passing from one testing compartment to another.

The portion of the membrane in contact with the downstream side of the grid may be treated, for example, heat treated, to form a sealing means when the membrane is attached to the downstream or bottom side of the cartridge housing.

The membrane is adapted to perform hybridization of a plurality types of target analytes.

A cartridge with a built-in membrane provides a convenient solution for rapid testing and at the same time mitigates potential contamination or cross-contamination due to less human processing steps.

The membrane is attached to the bottom side of the cartridge housing, and sealing is performed at the time of attachment.

The membrane may comprise a hot-meltable material such as Nylon, and liquid sealing is performed by hot-melt at the time of hot-melt attachment.

The membrane may be treated with a capture probe or capture probes for capturing and displaying a target analyte of a specific or pre-determined sequence.

Examples of capture probes include any gene specific nucleic acid oligonucleotides complementary to the target analyte sequence(s) to form a single dot for single sequence or gene; for multiple dots in the array format wherein each dot has a specific sequence corresponding to the target sequences or genes in question for detection such as HPV genotyping of any single type i.e. type 16 or multiple genotyping assay such as the GenoFlow Array HPV assay for 33 types already in the market and P450-CYP2D6 genotyping reported elsewhere in Patent pendent application (PCT/IB2008/054044) and HLA genotyping classification (USPTO no 7732138 B2). Other examples such as simultaneous assay for multiple types of different viral organism namely a panel assay which include HIV, HBV and HCV viruses in one membrane array and alike.

### Brief Description of Drawings

Exemplary embodiments of the present inventions will be explained by way of example with reference to the accompanying drawings, in which:-
Figure 1 is a perspective view of a flow-through apparatus according to the present disclosure,
Figures 2 and 3 are lateral perspective views of the flow-through apparatus of Figure 1 with an external housing is removed,
Figure 4 is a perspective shown depicting a reaction chamber of the flow-through apparatus of Figure 3 with the chamber cover opened,
Figure 5 is a perspective depicting the reaction chamber of the flow-through apparatus of Figure 3 mounted with 4 modular hybridization cartridges received,
Figure 5A is a plan view depicting a relationship between cartridge cells and distribution of draining apertures on the bottom surface of the reaction chamber of the apparatus of Figure 1,
Figure 6 depicts the reaction chamber of Figure 5 when a clamping device is latched with the 4 modular hybridization cartridges in a testing position,
Figure 7 shows the reaction chamber of Figure 5 when the reclosable window is closed to isolate the modular hybridization cartridges received inside the reaction chamber from the outside environment,

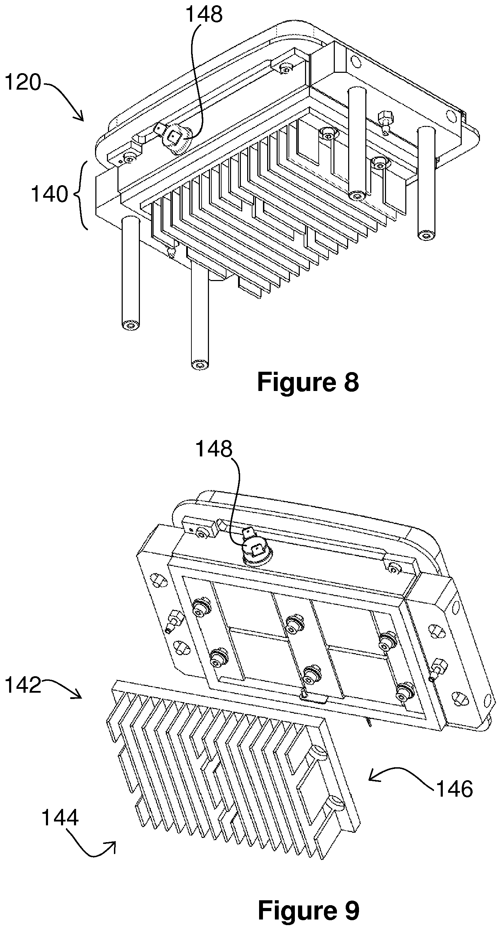

Figure 8 is a bottom perspective view of the reaction chamber of Figure 4,
Figure 9 is a partially exploded view of the reaction chamber of Figure 4 with an integral heat sink device detached,
Figure 10 is a side perspective view of the flow-through apparatus of Figure 1 with the main housing removed and showing an air movement arrangement,
Figure 11 is a longitudinal cross-sectional view of the apparatus of Figure 10,
Figure 12 is a top perspective view of a casted base portion of the reaction chamber of Figure 1 showing the bottom surface of the reaction chamber,
Figure 12A is a plan view showing an enlarged portion of the bottom surface of the reaction chamber,
Figure 12B is a bottom perspective view of Figure 11 depicting a plurality of draining tubes connected to draining apertures distributed on the bottom surface of the reaction chamber,
Figure 13 is a schematic side view depicting a reaction chamber connected with a draining network,
Figure 14 is an enlarged schematic side view depicting a portion of the draining network of Figure 13,
Figures 15 and 15A are first and second top perspective views depicting a modular hybridization cartridge adapted for use with a flow-through apparatus of Figure 1,
Figures 16 and 16A are first and second bottom perspective views of the hybridization cartridge of Figure 15,
Figure 17 is a longitudinal view depicting schematically the mounting of a hybridization cartridge on the reaction chamber, and

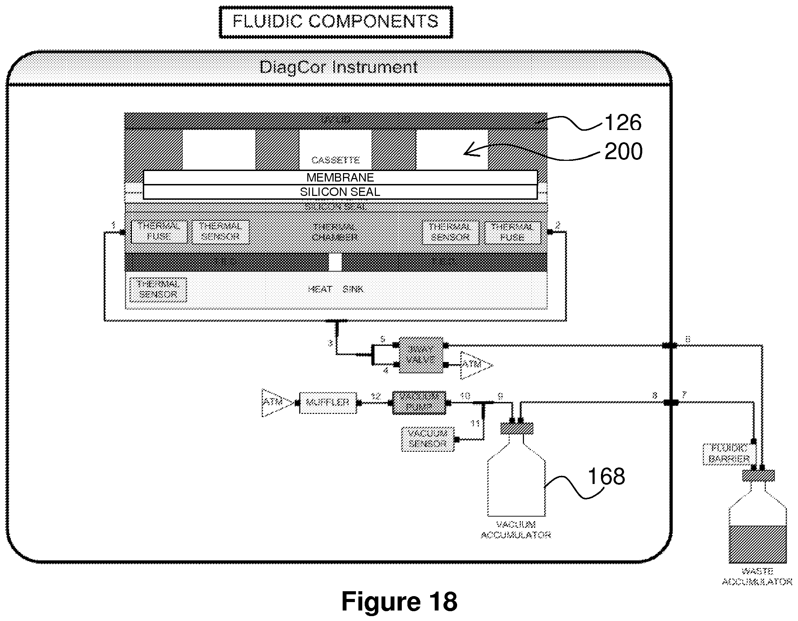

Figure 18 is a schematic diagram illustration the operation of the flow-through apparatus.

### Detailed Description of Exemplary Embodiments

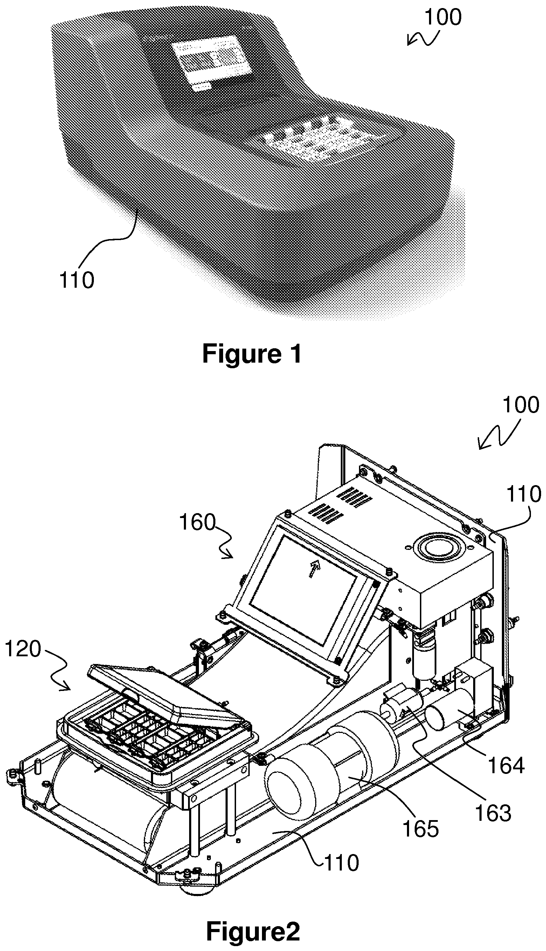

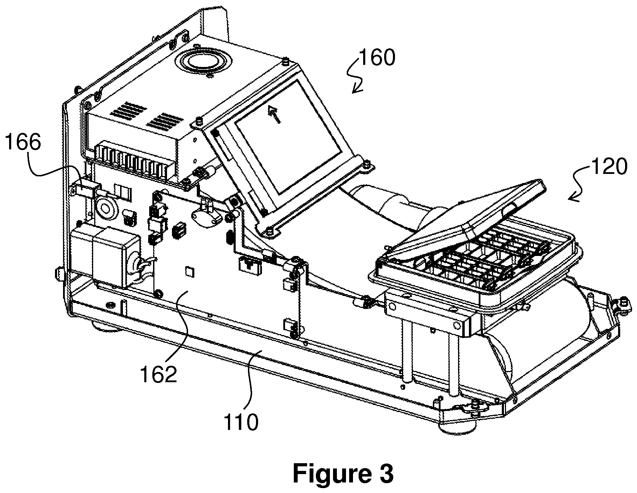

A flow-through apparatus **100** depicted in Figures 1 to 3 comprises a main housing **110** on which there is mounted a reaction chamber **120,** a temperature regulation assembly **140,** a power supply module, a data display monitor **160,** a control board **162,** a vacuum suction pump **164** and other optional or peripheral devices. The peripheral devices include a data communications interface, such as a USB port **166,** a silencer **163,** and a vacuum accumulator **165.**

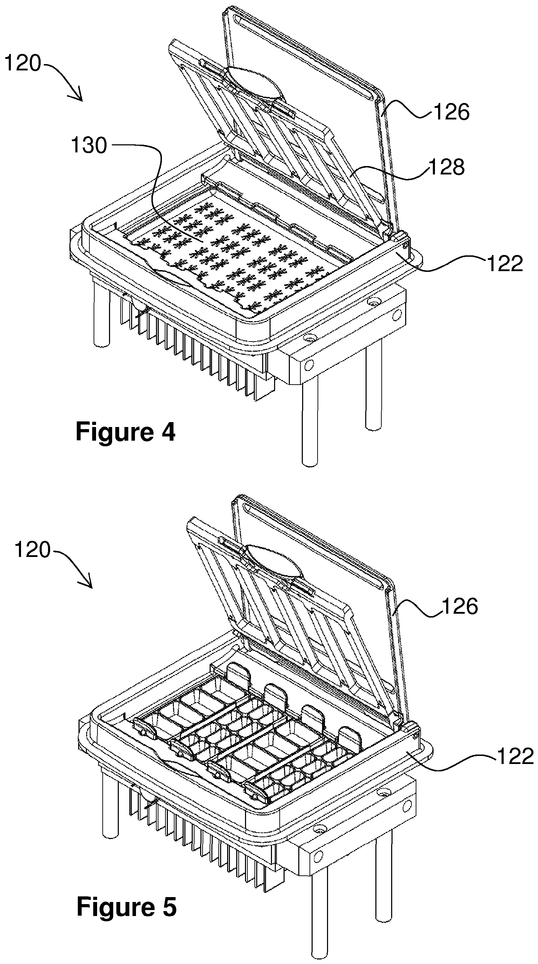

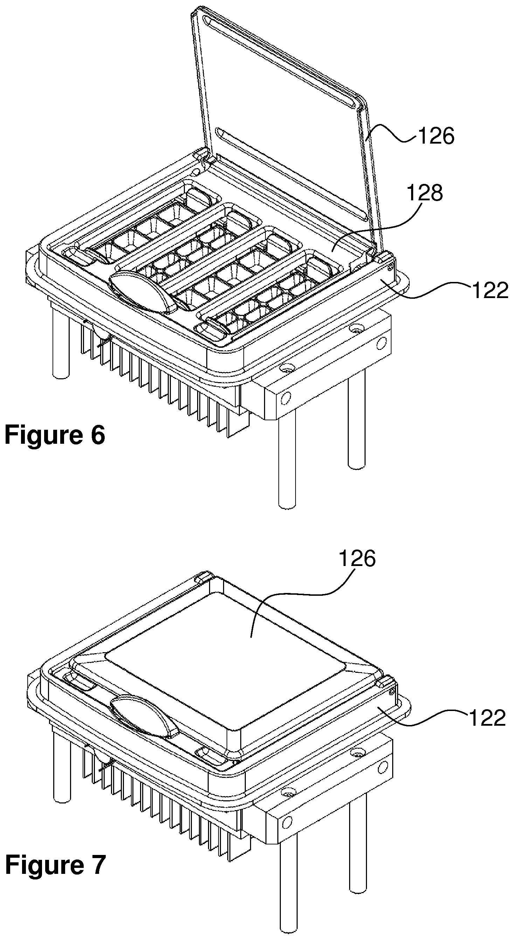

The reaction chamber **120** is adapted to provide an enclosure of controlled environmental conditions to facilitate molecular reactions, such as molecular reactions between a target analyte and test agents. As depicted in more detail in Figures 4, 5 and 6, the reaction chamber **120** comprises a lidded housing enclosure in which a metal block **124** is mounted to form a bottom surface. The housing enclosure comprises a main housing portion **122** which is moulded of hard plastics, a plastic lid or cover **126** which is hingedly connected to the main housing portion **122** and moveable between an open position and a closed position about a hinge axis formed on one side of the main housing portion **122,** and a latching frame **128** which is also hinged to the main housing portion **122** and sharing the same hinge axis with the cover **126.**

The reaction chamber **120** comprises a main reaction compartment which extends between the metal block **124** and the cover **126,** and is surrounded by the side walls of the main housing portion **122.** The cover **126** also includes a transparent window for user observation of the conditions inside the main reaction compartment. The main reaction compartment is adapted to receive modular hybridization cartridges to be explained in more detail below, and the hingedly connected cover **126** is adapted to facilitate insertion or loading of test objects into the reaction chamber for reaction, as well as removal or unloading of the test objects at the end of reaction when the lid is opened. The cover will remain closed when reaction is taking place in order to facilitate reactions under controlled environmental conditions, and to mitigate potential contamination or adverse external or ambient influence.

The base surface **130** of the reaction chamber is an upper surface of the metal block **124.** The metal block, as an example of a thermally conductive block, is made of stainless steel and is adapted to provide a thermal buffer so that the temperature at the base surface ("the reaction surface") **130** can be accurately regulated and maintained to within +/- 0.5 °C or even less of a target temperature during operation. A plurality of through apertures is distributed throughout the metal base surface **130** for draining liquid residuals by vacuum suction. The through apertures, as an example of draining apertures, are connected to a suction and draining network to facilitate removal of excess or residual liquid inside the reaction compartment. The draining apertures are distributed in regular arrays or a regular matrix to facilitate uniform or near uniform suction across the metal base during use when vacuum suction is applied. Apart from draining residual liquid inside the reaction chamber, the uniformed suction power also forms part of a controlled environment by providing and maintaining a uniform or substantially uniform negative pressure to control flowing of target analytes under test through a membrane of a test cartridge.

A portion of the metal block **124** below the base surface **130** protrudes through a window formed on the bottom of the main plastic housing enclosure **122,** and its underside is thermally connected to the temperature regulation assembly **140** to be explained below.

The temperature regulation assembly **140** is adapted to provide a temperature controlled reaction environment inside the reaction compartment of the reaction chamber **120.** This controlled environment is implemented by regulating the temperature of the metal block, thereby also regulating the temperature at the reaction surface **130,** since the reaction surface is the upper surface of the metal block **124.**

The temperature regulation assembly **140** comprises an electric thermal assembly and a forced air conditioning arrangement. The electric thermal assembly comprises a finned metal block **142** having a finned surface **144** and an un-finned surface **146** and a plurality of electric thermal elements 148 such as Peltier elements. The Peltier elements **172,** as an example of electrical powered thermal conditioning elements or thermal electric elements, are mounted to provide electric heating or cooling to the underside of metal block **124,** thereby providing a temperature controlled reaction surface **130.** The underside of the metal block **124** is also thermally connected to an un-finned surface of the finned heat sink **142.** A finned heat sink is used as an example of a finned metal block, and the finned metal block is used as thermal exchanger to promote thermal exchange with external streams of temperature conditioning air to facilitate temperature conditioning of the metal block **124.**

To mitigate undesirable thermal communication between the metal block **124** and the finned metal block **142,** thermal insulators are placed around the space between the metal block **124** and the heat sink **142.** To monitor temperature distribution on the temperature controlled reaction surface to maintain temperature uniformity on the reaction surface, a plurality of temperature sensors is distributed on the underside of the metal block to detect temperature at various spots on the metal base. The output signals of the temperature sensors are sent to an on-board micro-processor on the control board **162** for feedback control of the thermal electric elements **148** according to predetermined controlled conditions stored in the micro-processor.

While the distributed thermal electric elements provide distributed heating or cooling to the reaction surface **130** to promote temperature uniformity on the reaction surface, the present apparatus further include an additional forced air conditioning arrangement to provide thermal conditioning across the reaction base surface by forced air movements to further improve temperature uniformity

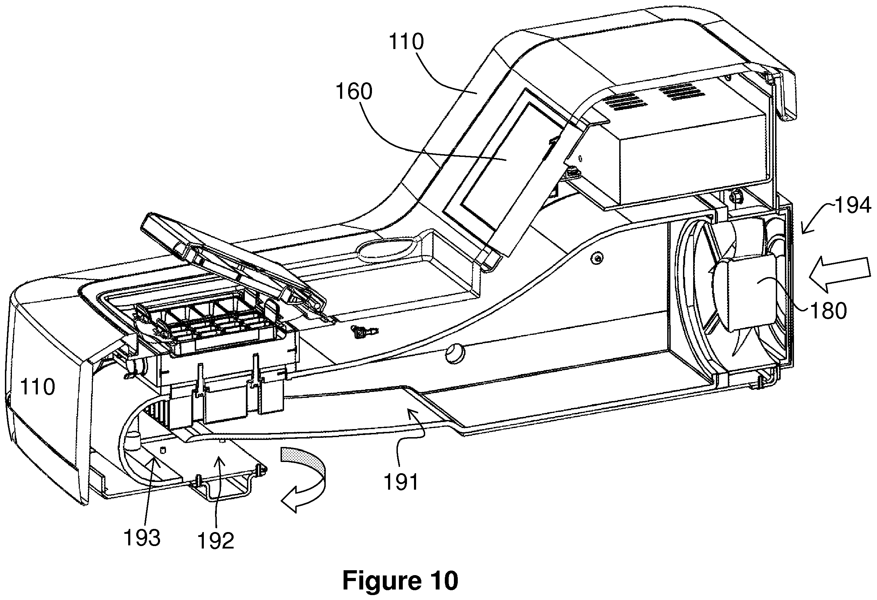

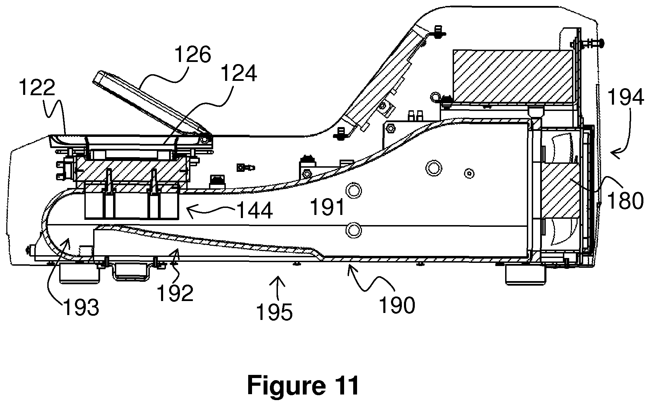

Referring to Figures 10 and 11, the forced air conditioning arrangement comprises an electric fan **180** such as a propeller fan or a centrifugal fan as an example of an air moving source adapted to generate forced air movements, and an air duct **190** coupled to the air moving source for guiding the forced air movements generated by the air moving source to temperature condition the reaction surface. The air duct includes a first duct part **191,** a second duct part **192** and a reversal aperture **193** which is intermediate the first and second duct parts. The first duct part is elongate and extends from an air inlet **194** located at the rear end of the flow through apparatus to the thermal exchanger, with the underside of the thermal exchanger also forming a part, and a distal end, of the first duct part. The first duct part is arranged to guide forced air movements coming from the air inlet to form an air stream and contact the underside of the thermal exchanger for thermal exchange therewith just before reaching the reversal aperture. It will be appreciated that the air stream moves in a direction which is parallel or substantially parallel to the reaction surface when at that distal end when thermal exchange takes place.

So that a slower fan can be used for quieter operation while still providing sufficient thermal exchange capability, the first duct part narrows towards the distal end or the reversal aperture end so that the air stream accelerates towards the thermal exchange to enhance thermal exchange power notwithstanding a slow speed air stream at the air inlet. In order to promote temperature uniformity across the entire underside of the thermal exchange, noting that the thermal content of the air stream is varied as it moves across the underside of the thermal exchanger due to thermal exchange therewith, the first duct part is tapered at its distal end, that is, the end immediately adjacent the reversal aperture, so that the air stream at that distal end further accelerates when it approaches the distal end to bring about thermal uniformity across the entire thermal exchanger. As shown more particularly in Figures 10 and 11, the distal end of the first duct part is defined by the underside of the thermal exchanger and a baffle of the first duct part which tapers towards the reversal aperture as it progress from a proximal side of the thermal exchanger to the distal side, the proximal side being the side proximal the air inlet. As the underside of the thermal exchanger defines a generally planar surface, the baffle end of the first duct part gradually tilts upwards towards the thermal exchanger to form the tapering.

The reversal aperture is located at the distal end of the first duct part (that is, the end of the first duct part most distant from the air inlet) and just before the closed end of the air duct. The reversal aperture provides an exit location to the exhaust air stream so that the exhaust air stream could leave the apparatus after having passed and contacted the underside of the thermal exchanger without encountering or interfering with an incoming air stream. The reversal aperture is defined by a baffle which is defined by a concave closed end of the air duct and a distal end portion of the first duct part which is also the beginning portion of the second duct part. The curvature of the concaved closed end is adapted to help guide the air stream to move or transit more smoothly into the second duct part for exhaust.

The second duct part is immediately below the first duct part **192** and is joined to the first duct part **191** by the reversal aperture **193.** The second duct part is parallel or substantially parallel to the first duct part, and defines a return path which is parallel or substantially parallel to the first duct part, albeit the air stream is in an opposite direction to the incoming air stream. The second duct part, coupled with the reversal aperture, defines a return path so that the exhaust air stream could move in an about-turn direction without encountering or interfering with the incoming stream, and does not have to exit at the front end of the apparatus for user comfort.

An air outlet **195,** or an exhaust outlet, is formed on a side of the second duct part and at a location intermediate the air inlet and the reversal aperture so that the air stream could be exhausted from a lateral side of the apparatus at a direction orthogonal to the incoming stream to minimize interference to the air inlet.

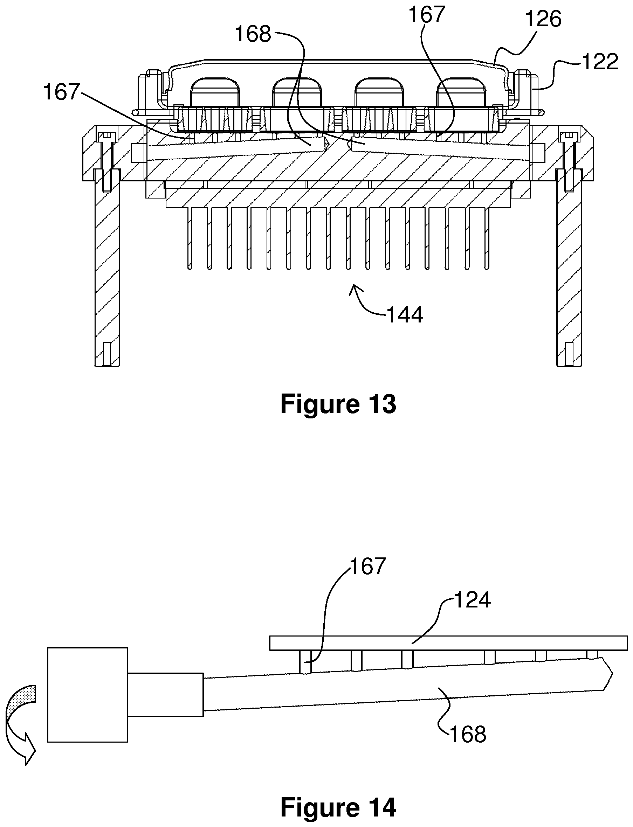

A plurality of through suction apertures **129** is distributed on the base surface **124** to facilitate uniform suction across the entire base surface for suction removal of residual liquid. The through apertures are connected to a suction draining arrangement more particularly depicted in Figures 13 and 14. Each draining arrangement comprises a draining network comprising a plurality of vertical branch or minor drain pipes **167** connected to a main drain pipe **168.** The main drain pipe (or the major pipe) is closed at one end, with the open end connected to a suction source, such as a vacuum pump, and the plurality of branch drain pipes joining the major pipe at locations intermediate the closed and open ends. The major pipe is tilted with respect to the reaction surface towards the open end so that residual liquid reaching the main drain pipe will move to the open end due to gravity even when the suction source is not in operation. Therefore, the open end of the major pipe forms a main draining aperture. Due to the tilting of the major pipe and the substantially horizontal disposition of the reaction surface, the length of the minor pipes is the shortest at the closed end and the longest at the open end. For minor pipes not at the extreme ends, their lengths vary between the shortest and the longest such that the length of a minor pipe closer the open end is longer than that further from the open end, or a minor pipe closer to the closed end is shorter than one which is further away from the closed end.

In addition to draining residual liquid from the reaction chamber by gravity, the tilting of the major pipe in combination with the variable length of the minor pipes also facilitates uniform suction power across the various through apertures joined to the same major pipe. More specifically, the shorter minor pipe lengths at locations more distant from the suction source end would compensate the gradual loss of suction power at the distal end of the major pipe to achieve a more uniform suction power and hence suction rate, especially a more uniformed volumetric suction rate or suction speed.

To further enhance suction power uniformity across the reaction chamber, the reaction chamber is divided into a plurality of sub-sections such that each chamber sub-section is under the suction coverage of a draining network. The distributed draining network helps to bring about a more uniformed suction due to a smaller spatial coverage by each suction draining network.

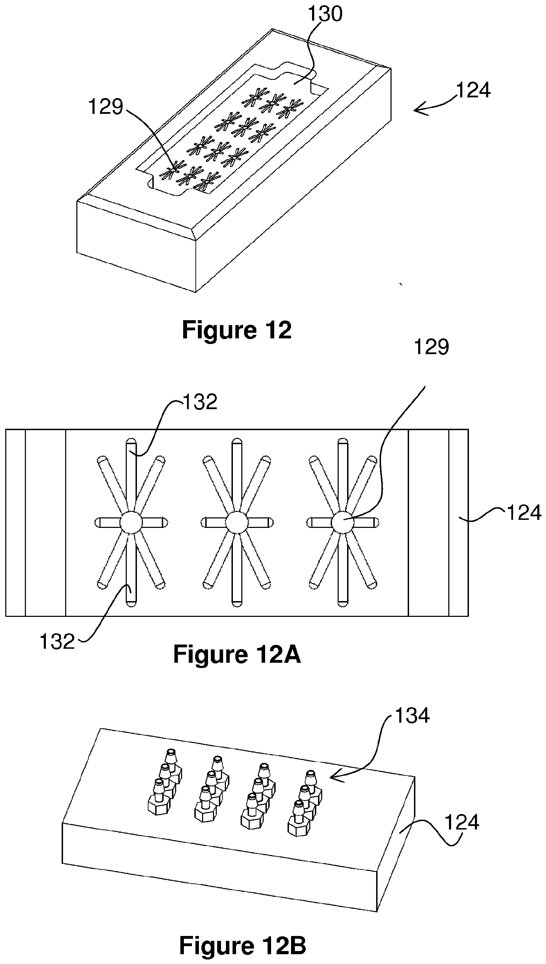

In another exemplary embodiment of the reaction chamber as depicted in Figures12, 12A and 12B, each suction aperture **129** is surrounded by a network of drain channels **132** each of which is in communication with the suction aperture **129.** The network of drain channels is arranged in a radial manner such that each channel extends radially from the suction aperture. The radial, or star-shaped, drain channel arrangement facilitates the distribution or spread of suction power originating from the suction aperture across the footprint of the surrounding channels when the test objects are in place. The channels are exposed grooves and are preferably inclined towards the suction aperture for added efficacy. A plurality of draining tubes **134** are also disposed underneath the metal block **124** for interconnection with the draining networks.

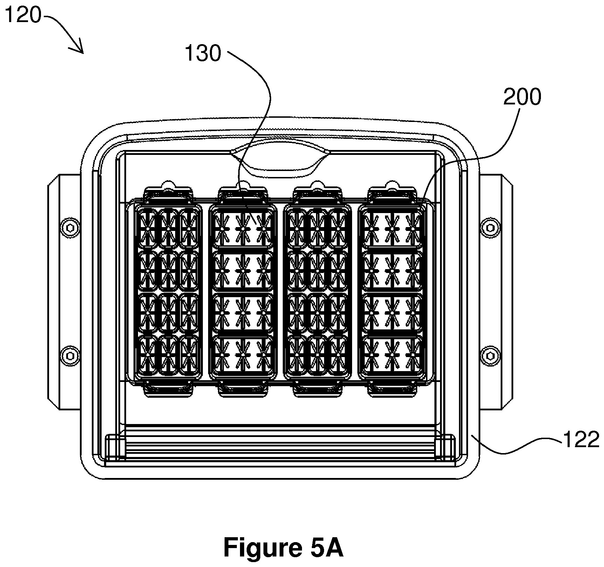

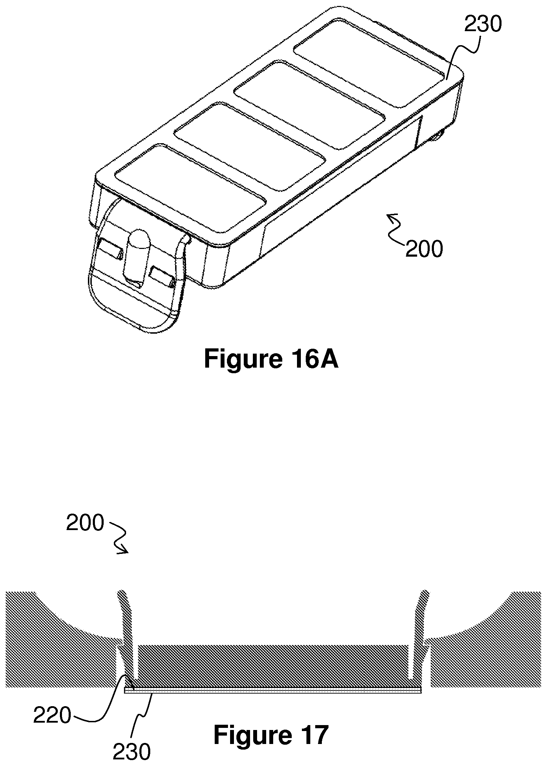

Figures 5A, and 15 - 17 depict exemplary rapid test cartridges which are suitable for use with a reaction chamber of the flow through apparatus described above for rapid and convenient analyte tests to be explained below.

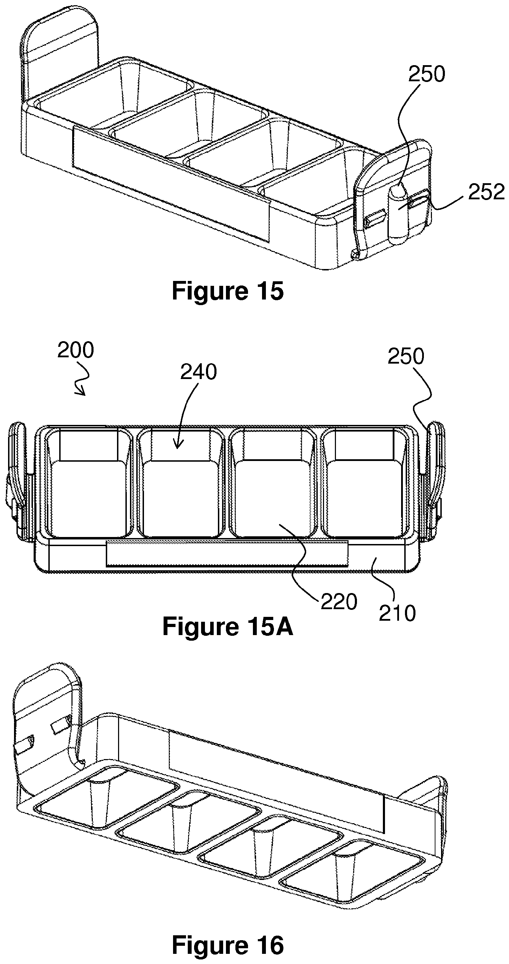

The exemplary hybridization cartridge 200 of Figure 15 comprises a main cartridge body **210,** a membrane **220** attached to the main cartridge body and a sealing member **230.** The main cartridge body is moulded of plastics and includes the boundary of a plurality of test compartments. The plastic body comprises main peripheral walls which collectively define the outer periphery of the cartridge body and partitioning walls which define the individual test compartments in cooperation with the peripheral wall. The peripheral and partitioning walls formed a grid structure and collectively define a plurality of testing wells **240** which form testing compartments after attachment of a porous membrane. The porous membrane is suitable for conducting molecule analyses and is capable of trapping or retaining capture probes for molecule identification as is known to persons skilled in the art. As depicted in Figures 5, and 5A, a single cartridge may have 4 or 12 testing cells or compartments. Of course, other number of test compartments say, between 1 to 16 is useful for most practical applications.

To form a multiple compartment test cartridge, the membrane is attached to the plastic main body, for example, by fusion bonding such as hot melt or ultra-sonic bonding. Fusion bonding is preferred because the fusion bonding process also seals off adjacent compartments so that analytes will not cross flow or leak into an adjacent test compartment to obviate contamination of analytes. An example of suitable materials for the main body and membrane are respectively nylon-based plastic body and nylon-based membrane which demonstrate good fusion and sealing characteristics. To facilitate easy insertion and removal, handle portions **250** are formed at the longitudinal ends of the main cartridge body. The handle portions are integrally moulded on the main body, with the lower end of each of the handle portion hingedly connected to provide resilience to the handle portions. The resilience of the handle portions enables the cartridge to sit tightly inside the reaction chamber and easily removal by urging the free ends of the handle portions towards each other. To further secure the test cartridge inside the reaction chamber, a chamfered protrusion **252** as an example of engagement means is formed on the outer side of the handle portion. The chamfered protrusion is adapted for latching engagement in cooperation with a latching means on the reaction chamber to further secure the cartridge against the reaction surface for stable reaction conditions.

To provide further sealing against cross flow contamination between adjacent compartments and to provide air-tight sealing on the underside of the cartridge to ensure uniform suction, an additional sealing ring, in the form of a sealing template, such as a sealing template made of silicone rubber, is adhered onto the underside of the membrane and following the compartment defining grid to form a sealing gasket.

As depicted in Figures 5, 5A, and each of the cartridges is a test cartridge module and a plurality of 4 test cartridges can be placed inside the reaction chamber. Because of the sealing gasket arrangement, the reaction chamber can operate with one to four cartridge modules in cooperation with the latching means on the reaction chamber. While the cartridge modules depicted herein are of the same outer dimensions, it will be appreciated that the cartridge module size could vary such that the reaction chamber may accommodate 1, 2 or 4 cartridges or a combination of cartridges of different sizes. This modular cartridge design provides enhanced flexibility so that tests could be performed using different types and number of cartridges independently.

As shown in Figure 5A, the cartridge and the reaction chamber are arranged such that when a cartridge is placed inside the reaction chamber, a plurality of suction apertures are aligned with each test well or test compartment to promote uniform suction.

In use, the operating parameters of the flow-through apparatus are set and a cartridge having a membrane treated with a capture probe is placed inside the reaction chamber and secured by the latching arrangement. A target analyte is then applied to the cartridge. The latching mechanism secures the cartridge such that the membrane is proximal to and pressed against the controlled temperature reaction surface to facilitate reaction under a controlled temperature environment when the reaction chamber is closed. When the apparatus is set to operate under operation conditions, hybridization of the target analytes will occur under a uniform suction power to control the flow-through speed. Initial measurements show that a temperature uniformity of about ±0.3% across the entire reaction surface is obtained by the temperature regulation arrangement described herein.

When only a small number of samples are required to be tested, a single or a selected plurality of cartridges less than the maximum number of cartridges receivable inside the reaction chamber is mounted. In such a case, the reaction chamber will be divided into a plurality of reaction compartments in cooperation with the one or the selected plurality of cartridges when the hybridization cartridges are put inside the reaction chamber and latched into operation positions.

While the present invention has been explained with reference to the embodiments above, it will be appreciated by persons skilled in the art that the embodiments are for illustration only and should not be used to restrict the scope of the invention as defined in the claims. For example, an embodiment of flow through apparatus described herein includes improvements in relation to temperature conditioning by an exemplary air duct arrangement having a reversal aperture, temperature conditioning by a tapered air duct portion, distributed suction apertures, a draining network comprising a tilted major pipe, a draining network comprising a tilted major pipe in combination with vertical minor pipes of varying length arranged to procure uniform suction, suction channels surrounding a suction aperture to spread suction for suction uniformity; it should be appreciated that such features could be applied independently or in combination without limitation.

**Table of Numerals**

| | | | |
|---|---|---|---|
| 100 | | | Flow-through apparatus |
| | 110 | | Main housing |
| | 120 | | Reaction chamber |
| | | 122 | main housing portion/ main plastic housing enclosure |
| | | 124 | Metal block |
| | | 126 | Lid/ cover |
| | | 128 | Latching frame |
| | | 129 | Suction apertures |
| | 130 | | Chamber base surface/ reaction surface |
| | 132 | | Drain channels |
| | 134 | | Draining tubes |
| | 140 | | Temperature regulation assembly |
| | 142 | | Finned metal block / heat sink |
| | 144 | | Finned surface |
| | 146 | | Unfinned surface |
| | 148 | | Thermal electric elements |
| | 160 | | Display monitor |
| | 162 | | Control board |
| | | 163 | Silencer |
| | | 164 | Vacuum suction pump |
| | | 165 | Vacuum accumulator |
| | | 166 | USB port |
| | | 167 | Branch drain pipes |
| | | 168 | Main drain pipe |
| | 170 | | Heat sink |
| | | 172 | Peltier elements |
| | 180 | | Fan |
| | 190 | | Air duct |
| | | 191 | First duct part |
| | | 192 | Second duct part |
| | | 193 | Reversal aperture |
| | | 194 | Air inlet |
| | | 195 | Air outlet |
| 200 | | | Cartridge |
| | 210 | | Cartridge body |
| | 220 | | Membrane |
| | 230 | | Sealing member |
| | 240 | | Testing well |
| | 250 | | Handle portions |
| | | 252 | Chamfered protrusion |

## Claims

1. A cartridge (200) adapted for use with a flow-through hybridization apparatus (100) wherein the cartridge (200) comprises a moulded cartridge housing (210) on which there is formed a grid which defines a plurality of testing compartments (240), and on a downstream side of the grid it is mounted a porous membrane (220); the grid being adapted to facilitate individual hybridization at the individual testing compartments (240); wherein the cartridge (200) comprises first sealing means (230) on the downstream side of the grid to prevent analytes from passing from one testing compartment (240) to another; **characterized in that** the first sealing means (230) are provided in the form of a template adhered onto an underside of the membrane (220) following the testing compartments (240) defining grid to form a sealing gasket providing individual fluid sealing of the testing compartments (240) when the cartridge (200) is received inside a reaction chamber of a flow-through apparatus (100) during use; the cartridge (200) having the portion of the membrane (220) in contact with the downstream side of the grid treated to form second sealing means when the membrane (220) is attached to the downstream side of the cartridge housing (210).

2. A cartridge (200) according to Claim 1, wherein the membrane (220) is adapted to perform hybridization of a plurality types of target analytes.

3. A cartridge (200) according to any of Claims 1 to 2, wherein the cartridge housing (210) is adapted such that a selected plurality of cartridges up to a maximum cartridge number is receivable by the reaction chamber at the same time.

4. A cartridge (200) according to any of the preceding Claims, wherein the membrane (220) comprises a hot-meltable material such as a Nylon, and liquid sealing is performed by hot-melt at the time of attachment.

5. A cartridge (200) according to any of the preceding Claims, wherein the membrane (220) is treated with a capture probe or a plurality of capture probes for capturing and displaying a target analyte of a specific or pre-determined sequence.

6. A cartridge (200) according to any of the preceding Claims, wherein a handle portion (250) is also moulded on the cartridge housing (210) to facilitate insertion into or removal of the cartridge from the reaction chamber as a single unit.

7. A cartridge (200) according to Claim 6, wherein the handle portion (250) is resiliently movable relative to the moulded grid, for example, by hinged attachment or hinged moulding to the cartridge housing (210).

8. A cartridge (200) according to Claim 7, wherein the cartridge is arranged such that the handle portion (250) operates as a position fixing means and urges against the internal walls of the reaction chamber of the flow-through apparatus (100) when seated.

9. A cartridge (200) according to Claim 7 or 8, wherein an engaging means for releasable engagement with a corresponding latching means on the flow-through apparatus (100) is moulded on the handle portion (250) for locking the cartridge in position inside the reaction chamber.

10. A cartridge (200) according to Claim 9, wherein the engaging means comprises a tooth shaped or chamfered protrusion (252) which is arranged to engage with complementarily shaped latch means on the flow-through apparatus (100).

11. A cartridge (200) according to any of the preceding Claims, wherein the cartridge housing (210) is sized so that a plurality of cartridges are individually receivable inside the reaction chamber at the same time and individually removable independent of the presence of other cartridges.

12. A cartridge (200) according to any of the preceding Claims, wherein the sealing template is adhered to the bottom of the cartridge housing (210) to seal the downstream periphery of the cartridge.

## Patentansprüche

1. Kartusche (200), die zur Nutzung mit einem Durchfluss-Hybridisierungsapparat (100) angepasst ist, wobei die Kartusche (200) ein geformtes Kartuschengehäuse (210) umfasst, auf dem ein Gitter gebildet ist, das eine Mehrzahl von Testfächern (240) definiert, und auf einer nachgelagerten Seite des Gitters eine poröse Membran (220) angebracht ist; wobei das Gitter dazu angepasst ist, individuelle Hybridisierung an den individuellen Testfächern (240) zu unterstützen; wobei die Kartusche (200) erste Dichtungsmittel (230) auf der nachgelagerten Seite des Gitters umfasst, um zu verhindern, dass Analyten von einem Testfach (240) zu eine anderen gelangen; **dadurch gekennzeichnet, dass** die ersten Dichtungsmittel (230) in der Form einer Matrize bereitgestellt sind, die an der Unterseite der Membran (220) anhaftet, dem die Testfächer (240) definierenden Gitter folgend, um ein Dichtung zu bilden, die individuelle Fluidabdichtung der Testfächer (240) bereitstellt, wenn die Kartusche (200) innerhalb einer Reaktionskammer eines Durchflussapparats (100) während der Nutzung aufgenommen wird; wobei die Kartusche (200) den Abschnitt der Membran (220) in Kontakt mit der nachgelagerten Seite des Gitters aufweist, das behandelt ist, um zweite Dichtmittel zu bilden, wenn die Membran (220) an der nachgelagerten Seite des Kartuschengehäuses (210) befestigt ist.

2. Kartusche (200) nach Anspruch 1, wobei die Membran (220) angepasst ist, um Hybridisierung an einer Mehrzahl von Arten von Zielanalyten durchzuführen.

3. Kartusche (200) nach einem der Ansprüche 1 bis 2, wobei das Kartuschengehäuse (210) derart angepasst ist, dass eine ausgewählte Mehrzahl von Kartuschen bis zu einer maximalen Kartuschenanzahl durch die Reaktionskammer zur gleichen Zeit aufnehmbar ist.

4. Kartusche (200) nach einem der vorstehenden Ansprüche, wobei die Membran (220) ein heißschmelzbares Material wie ein Nylon umfasst und Flüssigkeitsabdichtung durch Heißschmelzen zum Zeitpunkt der Befestigung durchgeführt wird.

5. Kartusche (200) nach einem der vorstehenden Ansprüche, wobei die Membran (220) mit einem Erfassungsfühler oder einer Mehrzahl von Erfassungsfühlern zum Erfassen und Anzeigen eines Zielanalyts einer spezifischen oder vorbestimmten Sequenz behandelt ist.

6. Kartusche (200) nach einem der vorstehenden Ansprüche, wobei ein Griffabschnitt (250) ebenfalls auf das Kartuschengehäuse (210) geformt ist, um Einsetzen oder Entfernen der Kartusche in bzw. aus der Reaktionskammer als eine einzelne Einheit zu erleichtern.

7. Kartusche (200) nach Anspruch 6, wobei der Griffabschnitt (250) relativ zu dem geformten Gitter elastisch bewegbar ist, beispielsweise durch gelenkige Befestigung oder gelenkiges Formen an dem Kartuschengehäuse (210).

8. Kartusche (200) nach Anspruch 7, wobei die Kartusche derart angeordnet ist, dass der Griffabschnitt (250) als ein Position fixierendes Mittel wirkt und gegen die Innenwände der Reaktionskammer des Durchflussapparats (100) drückt, wenn sie sitzt.

9. Kartusche (200) nach Anspruch 7 oder 8, wobei ein Eingriffmittel für lösbares Eingreifen mit einem entsprechenden Verschlussmittel auf dem Durchflussapparat (100) auf dem Griffabschnitt (250) geformt ist, um die Kartusche in der Reaktionskammer in Position zu sichern.

10. Kartusche (200) nach Anspruch 9, wobei das Eingriffmittel einen zahnförmigen oder abgeschrägten Vorsprung (252) umfasst, der angeordnet ist, um mit komplementär geformten Verschlussmitteln auf dem Durchflussapparat (100) einzugreifen.

11. Kartusche (200) nach einem der vorstehenden Ansprüche, wobei das Kartuschengehäuse (210) so bemessen ist, dass eine Mehrzahl von Kartuschen individuell in der Reaktionskammer zur gleichen Zeit aufnehmbar und unabhängig von dem Vorliegen anderer Kartuschen individuell entnehmbar ist.

12. Kartusche (200) nach einem der vorstehenden Ansprüche, wobei die Dichtungsmatrize an der Unterseite des Kartuschengehäuses (210) angehaftet ist, um das nachgelagerte Umfeld der Kartusche abzudichten.

## Revendications

1. Cartouche (200) conçue pour être utilisée avec un appareil d'hybridation à écoulement continu (100), dans laquelle la cartouche (200) comprend un carter de cartouche moulé (210) sur lequel est formée une grille qui définit une pluralité de compartiments d'essai (240), et d'un côté aval de la grille est montée une membrane poreuse (220); la grille étant conçue pour faciliter l'hybridation individuelle au niveau des compartiments d'essai individuels (240) ; dans laquelle la cartouche (200) comprend des premiers moyens d'étanchéité (230) du côté aval de la grille afin d'empêcher des analytes de passer d'un compartiment d'essai (240) à un autre ; **caractérisée en ce que** les premiers moyens d'étanchéité (230) sont fournis sous forme d'un modèle collé sur une face inférieure de la membrane (220) après la grille définissant les compartiments d'essai (240) pour former un joint d'étanchéité assurant une étanchéité individuelle aux fluides des compartiments d'essai (240) lorsque la cartouche (200) est reçue à l'intérieur d'une chambre de réaction d'un appareil à écoulement continu (100) en cours d'utilisation ; la cartouche (200) ayant une partie de la membrane (220) en contact avec le côté aval de la grille traitée pour former des deuxièmes moyens d'étanchéité lorsque la membrane (220) est fixée au côté aval du carter de cartouche (210).

2. Cartouche (200) selon la revendication 1, dans laquelle la membrane (220) est conçue pour effectuer une hybridation d'une pluralité de types d'analytes cibles.

3. Cartouche (200) selon l'une quelconque des revendications 1 à 2, dans laquelle le carter de cartouche (210) est conçu de telle sorte qu'une pluralité sélectionnée de cartouches inférieure à un nombre maximum de cartouches peut être reçue par la chambre de réaction en même temps.

4. Cartouche (200) selon l'une quelconque des revendications précédentes, dans laquelle la membrane (220) comprend un matériau thermofusible, comme du nylon, et une étanchéité aux liquides est effectuée par colle à chaud au moment de la fixation.

5. Cartouche (200) selon l'une quelconque des revendications précédentes, dans laquelle la membrane (220) est traitée à l'aide d'une sonde de capture ou d'une pluralité de sondes de capture, afin de capturer et d'afficher un analyte cible d'une séquence spécifique ou prédéterminée.

6. Cartouche (200) selon l'une quelconque des revendications précédentes, dans laquelle une partie poignée (250) est également moulée sur le carter de cartouche (210) pour faciliter l'insertion dans ou le retrait de la cartouche de la chambre de réaction en une seule unité.

7. Cartouche (200) selon la revendication 6, dans laquelle la partie poignée (250) peut se déplacer de manière souple par rapport à la grille moulée, par exemple, à l'aide d'une fixation articulée ou d'un moulage articulé au carter de cartouche (210).

8. Cartouche (200) selon la revendication 7, dans laquelle la cartouche est disposée de telle sorte que la partie poignée (250) sert de moyen de fixation de position et pousse contre les parois internes de la chambre de réaction de l'appareil à écoulement continu (100) lorsqu'elle est en place.

9. Cartouche (200) selon la revendication 7 ou 8, dans laquelle un moyen de prise assurant une prise libérable avec un moyen de verrouillage correspondant sur l'appareil à écoulement continu (100) est moulé sur la partie poignée (250) pour verrouiller la cartouche en position à l'intérieur de la chambre de réaction.

10. Cartouche (200) selon la revendication 9, dans laquelle le moyen de prise comprend une saillie chanfreinée ou en forme de dent (252) disposée de manière à entrer en prise avec un moyen de verrouillage de forme complémentaire sur l'appareil à écoulement continu (100).

11. Cartouche (200) selon l'une quelconque des revendications précédentes, dans laquelle le carter de cartouche (210) est dimensionné de telle sorte qu'une pluralité de cartouches peut être reçue individuellement à l'intérieur de la chambre de réaction en même temps, et peut être retirée individuellement indépendamment de la présence d'autres cartouches.

12. Cartouche (200) selon l'une quelconque des revendications précédentes, dans laquelle le modèle d'étanchéité est collé au fond du carter de cartouche (210) pour sceller la périphérie aval de la cartouche.
